# EUROPEAN PATENT SPECIFICATION

(11) **EP 3 176 460 B1**
(45) Date of publication and mention of the grant of the patent: **12.01.2022**
(21) Application number: 16184754.6
(22) Date of filing: 18.08.2016
(51) Int. Cl.: F16D 69/02, C04B 35/83, B29B 13/02, B29L 31/00, B29K 33/20, D01F 9/22

(54) **METHODS FOR ATMOSPHERIC SINGLE CYCLE CARBONIZATION**
VERFAHREN FÜR ATMOSPHÄRISCHE EINZELZYKLUSKARBONISIERUNG
PROCÉDÉS DE CARBONISATION ATMOSPHÉRIQUE À CYCLE UNIQUE

(30) Priority: 26.08.2015 US 201514836746
(43) Date of publication of application: 07.06.2017
(73) Proprietor: Goodrich Corporation, Charlotte, NC 28217-4578 (US)
(72) Inventor: HAWKINS, Gregory, Pueblo West, CO 81007 (US); MAIN, Diane, Erie, CO 80516 (US)
(74) Representative: Dehns

(56) References cited:
- US-A1- 2011 111 123
- US-A1- 2014 265 038
- None

## Description

### FIELD

The present disclosure relates generally to the manufacture of composite materials and parts. More particularly, the disclosure relates to a method and system for carbonizing composite preforms.

### BACKGROUND

Carbon/carbon ("C/C") parts are employed in various industries. An exemplary use for C/C parts includes using them as friction disks such as aircraft brake disks, race car brake disks, clutch disks, and the like. C/C brake disks are especially useful in such applications because of the superior high temperature characteristics of C/C material. In particular, the C/C material used in C/C parts is a good conductor of heat and thus is able to dissipate heat away from the braking surfaces that is generated in response to braking. C/C material is also highly resistant to heat damage, and is thus capable of sustaining friction between brake surfaces during severe braking, without a significant reduction in the friction coefficient or mechanical failure.

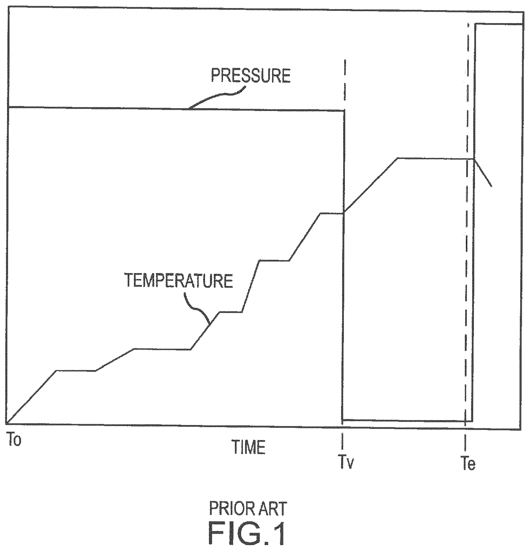

C/C parts may be formed by carbonizing preforms. The preforms may be carbonized in vacuum furnaces with a portion or all of the carbonization conducted at near vacuum pressures (e.g., 0.015 Atm or 1.5 kPa) during higher temperature segments (e.g., above 2,000°F or 1100°C) of the process. As shown in FIG. 1, temperature typically increases during a carbonization process from beginning time T₀ until end time Tₑ. At time Tᵥ, vacuum is drawn in the carbonization process and maintained until at least end time Tₑ. Carbonizing the C/C parts at near vacuum pressures may be costly in terms of energy consumption, particularly in instances where the vacuum is maintained throughout the process. US 2011/0111123 A1 describes a method of making a carbon-carbon composite brake disk or brake pad. US 2014/0265038 A1 describes a method of producing carbon fiber.

### SUMMARY

A method of carbonizing a preform is provided and defined in claim 1.

In various embodiments, the completing carbonization may be completed without drawing a vacuum in the furnace. The carbon preform may be densified by depositing a carbon matrix within a pore of the carbon preform. The PAN preform may be formed by needling a plurality of tows. An annular portion of the needled plurality of tows may be cut to form the PAN preform. The carbon preform may have a fiber volume ratio of about 16% to 32% after the completing the carbonization while maintaining the total pressure in the furnace greater than 0.5 Atm. After the completing the carbonization, the carbon preform may weigh approximately 50% of what the PAN preform weighed before the inserting the PAN preform into the furnace. The furnace may reach at least 1200°C while the total pressure in the furnace maintained at greater than 0.8 Atm.

[deleted]

In various embodiments, the completing carbonization may be completed without drawing a vacuum in the furnace. The carbon preform may be densified by depositing a carbon matrix within a pore of the carbon preform. The PAN preform may comprise an annular portion cut from the needled plurality of tows. The carbon preform may have a fiber volume ratio of about 16% to 28% after the completing the carbonization while maintaining the total pressure in the furnace greater than 0.5 Atm. After completing the carbonization while maintaining the total pressure in the furnace greater than 0.5 Atm, the carbon preform may weigh approximately 50% of a weight of the PAN preform before the inserting the PAN preform into the furnace. The PAN preform may comprise oxidized polyacrylonitrile (OPF).

According to various embodiments, a method of making a carbon part may comprise aligning a plurality of tows, needling the plurality of tows to form a polyacrylonitrile preform (PAN preform), and placing the PAN preform in a furnace to begin a carbonization process. The furnace may be heated to a temperature greater than 1200°C while maintaining a total pressure greater 0.8 Atm. Carbonization may be completed by converting the PAN preform into a carbon preform while maintaining the total pressure in the furnace greater than 0.8 Atm. The carbon preform may be densified by depositing a carbon matrix carbon matrix within a pore of the carbon preform.

In various embodiments, the carbonization may be completed without drawing a vacuum in the furnace. An annular portion of the needled plurality of tows may be cut to form the PAN preform. The carbon preform may have a fiber volume ratio of about 16% to 28% after the completing the carbonization while maintaining the total pressure in the furnace greater than 0.5 Atm. After the completing the carbonization the carbon preform may weigh approximately 50% of a weight of the PAN preform before the inserting the PAN preform into the furnace.

The forgoing features and elements may be combined in various combinations without exclusivity, unless expressly indicated herein otherwise. These features and elements as well as the operation of the disclosed embodiments will become more apparent in light of the following description and accompanying drawings. It should be understood, however, the following description and drawings are intended to be exemplary in nature and non-limiting.

### BRIEF DESCRIPTION OF DRAWINGS

The present disclosure may be better understood with reference to the following drawing figures and description. Non-limiting and non-exhaustive descriptions are described with reference to the following drawing figures. The components in the figures are not necessarily to scale, emphasis instead being placed upon illustrating principles. In the figures, like referenced numerals may refer to like parts throughout the different figures unless otherwise specified.
FIG. 1 illustrates a prior art plot of temperature and pressure over time in a carbonization furnace during a preform carbonization process;
FIG. 2 illustrates needling apparatus according to various embodiments;
FIG. 3 illustrates a flow chart for a process of forming a fibrous preform, in accordance with various embodiments;
FIG. 4 illustrates in perspective view, an annular fibrous preform cut from a preform shape, in accordance with various embodiments;
FIG. 5 illustrates a side cutaway view of a stack of fibrous annular preforms during a carbonization process in a carbonization furnace, in accordance with various embodiments;
FIG. 6 illustrates a plot of temperature and pressure over time in a carbonization furnace during a preform carbonization process without drawing vacuum in the furnace, in accordance with various embodiments; and
FIG. 7 illustrates a flow chart for a process of carbonizing a fibrous preform in a carbonization furnace without drawing vacuum in the furnace during carbonization, in accordance with various embodiments.

### DETAILED DESCRIPTION

The detailed description of various embodiments herein makes reference to the accompanying drawing figures. Furthermore, any reference to singular includes plural embodiments, and any reference to more than one component or step may include a singular embodiment or step.

Also, any reference to attached, fixed, connected or the like may include permanent, removable, temporary, partial, full and/or any other possible attachment option. Additionally, any reference to without contact (or similar phrases) may also include reduced contact or minimal contact. Finally, though the various embodiments discussed herein may be carried out in the context of an aircraft, it should be understood that systems and methods disclosed herein may be incorporated into anything needing a brake or having a wheel, or into any vehicle such as, for example, an aircraft, a train, a bus, an automobile and the like.

Carbon/carbon parts ("C/C") in the form of friction disks are commonly used for aircraft brake disks and race car brake and clutch disks. Carbon/carbon brake disks are especially useful in these applications because of the superior high temperature characteristics of C/C material. In particular, the carbon/carbon material used in C/C parts is a good conductor of heat and is able to dissipate heat generated during braking away from the braking surfaces. Carbon/carbon material is also highly resistant to heat damage, and thus, is capable of sustaining friction between brake surfaces during severe braking without a significant reduction in the friction coefficient or mechanical failure.

In general, there are currently two primary methods of manufacturing C/C materials. The first method involves the layup and cure of a carbon fiber, phenolic resin matrix composite, followed by pyrolysis and subsequent phenolic resin infiltration and pyrolysis cycles. Multiple resin infiltration and pyrolysis cycles are typically used until the part achieves the desired density. The second method involves fabrication of an oxidized PAN or carbon fiber preform, followed by carbonization and chemical vapor infiltration (CVI) densification. The chemical vapor infiltration cycles are continued, in conjunction with machining the preform between infiltration cycles if desired, until the desired part density is achieved. Combinations of these two basic process methods are also in use and may include variations in preform architecture, infiltration resin type, and chemical vapor infiltration conditions.

In general, C/C parts produced using the oxidized PAN fiber, carbonization, and CVI densification method are made in three successive manufacturing steps. First, a fibrous preform is made utilizing a variety of textile manufacturing techniques. Typically, the fibrous preform is made from oxidized polyacrylonitrile (PAN) fiber ("OPF"). Although numerous techniques are known in the art for making fibrous preforms from OPF, a common technique involves stacking layers of OPF to superimpose the layers. The added layers may then be needled perpendicularly to the layers with barbed, textile needles. The needling process generates a series of z-fibers through the fibrous preform that extend perpendicularly to the fibrous layers. The z-fibers are generated through the action of the needles pushing fibers from within the layer (x-y or in-plane) and reorienting them in the z-direction (through-thickness). Needling of the fibrous preform may be done as one or more layers are added to the stack or may be done after the entire stack is formed. The needles may also penetrate through only a portion of the preform or may penetrate through the entire preform. In addition, resins are sometimes added to the fibrous preform by either injecting the resin into the preform following construction or coating the fibers or layers prior to forming the fibrous preform.

After the fibrous preform is made, it is carbonized to convert the OPF into carbon fibers. Typically, fibrous preforms are carbonized by placing the preforms in a furnace with an inert atmosphere for a portion of the carbonization. Typically, vacuum is drawn in the furnace for at least a portion of the carbonization. As well-understood by those in the art, the heat of the furnace causes a chemical conversion which drives off the non-carbon chemical species from the preform. Some gas species containing carbon are driven off. For example CO, methane, HCN are all carbon containing. The furnace process converts the plastic fiber to carbon fiber by the reorganizing of the PAN fibers and shedding of chemical constituents. The resulting preform generally has the same fibrous structure as the fibrous preform before carbonizing. However, the OPF have been converted preferably to almost 100% carbon.

After the preform has been carbonized, the preform is densified. In general, densification involves filling the voids, or pores, of the fibrous preform with additional carbon material. This may be done using the same furnace used for carbonization or a different furnace. Typically, chemical vapor infiltration and deposition ("CVI/CVD") techniques are used to densify the porous fibrous preform with a carbon matrix. This commonly involves heating the furnace and the carbonized preforms, and flowing hydrocarbon gases into the furnace and around and through the fibrous preforms. As a result, carbon from the hydrocarbon gases separates from the gases and is deposited on and within the fibrous preforms. When the densification step is completed, the resulting C/C part has a carbon fiber structure with a carbon matrix infiltrating the fiber structure, thereby deriving the name "carbon/carbon."

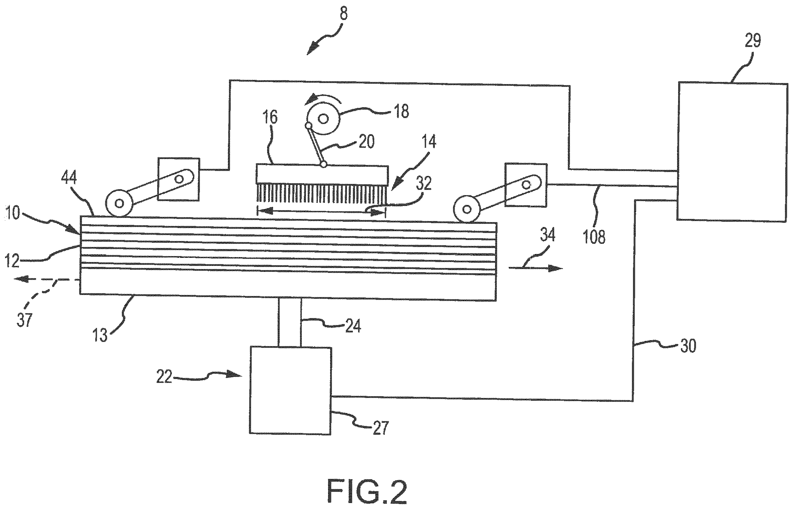

Referring now to the drawings, and particularly to FIG. 2, a schematic diagram is shown of a needling operation that may be used to form a fibrous preform 10 in accordance with various embodiments. Typically, the fibrous preform 10 is formed by superimposing a number of fibrous layers 12 on top of each other. The fibrous layers 12 are usually made from OPF. The fibrous layers 12 may be made in a variety of ways and may include discrete (staple) or continuous fibers, unidirectional or cross-layered fibers or braided structures. The fibrous layers 12 may also be preprocessed in various ways, such as preneedling processes, to make the fibrous layers more coherent.

Preferably, the fibrous layers 12 are placed on top of each other one-by-one. After each fibrous layer 12 is placed on top of the stack 44 of fibrous layers 12, the stack 44 is needled with a needling head 16. Numerous types of needling techniques are possible. However, as shown, most needling processes include a needling head 16 that moves up and down in a reciprocating manner. A drive mechanism, such as a rotating wheel, and an off-center connecting rod 20 may be used to accomplish the desired reciprocating motion. A plurality of needles 14, such as barbed needles, face the stack 44 of fibrous layers 12 and penetrate the fibrous layers 12 as the needling head 16 strokes downward. As a result, the barbs of the needles 14 push fibers from one fibrous layer 12 to the next fibrous layer 12 to form z-fibers that extend perpendicularly across the fibrous layers 12. Needling pulls fibers from the in-plane direction and forces them into the z-fiber direction, thus decreasing in-plane fiber content which may reduce high-energy friction performance and in-plane mechanical strength in the final composite. In general, the needling process has the effect of interlocking the individual fabric layers together. Thus, after needling, the fibrous preform 10 has fibers extending in three different directions (i.e., in the x and y directions in the plane of the fibrous layers 12 and the z direction perpendicular to the fibrous layers 12). The entire surface of the stack 44 of fibrous layers 12 may be needled by moving the support 13 back-and-forth or the needling head 16 may be repositioned along the surface of the stack 44. Preferably, the needles 14 only penetrate a portion of the fibrous layers 12 with each down stroke without penetrating through the entire stack 44 of fibrous layers 12, except when the bottom layers in the stack 44 are needled.

With continued reference to FIG. 2 according to various embodiments, a fibrous preform 10 is shown in the process of being formed in apparatus 8. The fibrous preform 10 is disposed on a bedplate or support 13 beneath a multitude of needles 14 mounted in a needling head 16. Support 13 is penetrable by the needles 14, and may be formed from a penetrable material such as foamed plastic or brush bristles, or a bedplate with holes aligned with the needles 14 to allow penetration. A "stripper" plate may be disposed above the support 13 configured to strip fibers away from the needles during operation. Fibrous preform 10 is comprised of fibrous layers 12 with a top layer defining an exposed surface. The fibrous preform 10 is then subjected to a needling pass in which the multitude of needles 14 are repeatedly driven into the fibrous preform 10 through the exposed surface as the fibrous preform 10 is passed beneath the needles in the direction of arrow 34. As used herein, the term "fibrous structure" refers to all the fibrous layers disposed on the support 13 beneath the needles 14 during a given needling pass. Layers may be added to the fibrous structure at one or more needling passes, but it is not necessary to add a fibrous layer to the fibrous structure at every needling pass.

The needles 14 are arranged in an array as is known in the art. Other types of needling devices or boards commonly known in the art are also acceptable. Several rows may be arranged parallel to each other so the entire width of the fibrous preform 10 may be subjected to needling with each needling pass. The array of needles 14 defines a needling zone 32.

The needles 14 are driven by means of a drive mechanism 18 that drives needling head 16 through a fixed range of travel in a reciprocating motion. The multitude of needles thereby displaces fibers among layers of the fibrous preform 10 producing "Z-fiber" bundles that pass between layers generally perpendicular to the layer interfaces. Additional layers are disposed over previous layers and subjected to additional needling passes which adheres the additional layers to the previous layers. Additional layers are added until a final desired thickness is established. The fibrous preform 10 may then be subjected to further needling passes without adding additional layers. The finished fibrous preform 10 can be processed in subsequent operations, in known manner, as previously described.

A support adjustment mechanism 22 adjusts the support position relative to the multitude of needles 14 in a manner well known in the art. Here, the support adjustment mechanism comprises jackscrew and motor/gearbox 27. A controller 29 controls the support adjustment mechanism 22 via control line 30 as desired in order to precisely position the support 13 relative to the multitude of needles 14. The fibrous preform 10 may be driven by means of a conveyor in the direction of arrow 34 such that the multitude of needles may be repeatedly driven into the exposed surface along the length of fibrous preform 10. The fibrous preform 10 and conveyor may be subsequently driven in the direction of arrow 37, thereby needling the fibrous preform structure in the opposite direction. Also, the fibrous preform 10 and conveyor may be continuously driven as the needles are driven into fibrous preform 10, or the fibrous preform 10 and conveyer may be synchronized with drive mechanism 18 such that the conveyor momentarily stops or travels in an elliptical path when the needles 14 are driven into fibrous preform 10. Any such variations are considered to be within the scope of this disclosure. Also, the various components of apparatus 8 may be oriented in various ways without departing from the invention. For example, apparatus 8 could be rotated onto a side or even inverted if a particular application desired such an arrangement.

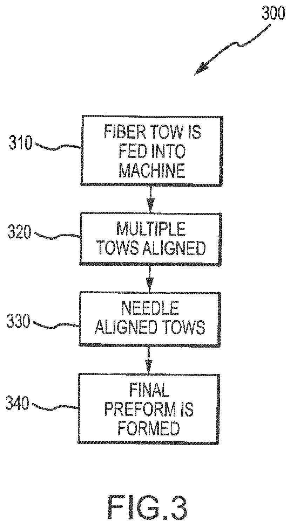

According to various embodiments, an exemplary process 300 of forming a PAN preform is depicted in FIG. 3. Although process 300 describes a needling approach to making preforms, other techniques may be used. Pan preforms formed using process 300 may subsequently be carbonized and densified. In block 310, a fiber tow of continuous filaments is utilized. At least one tow of fiber consisting of generally continuous filaments is fed into a fiber processing machine. Various fibers may be utilized for the process. For example, generally continuous, un-processed oxidized PAN fibers may be used. Such fibers consist of continuous fiber filaments that may be obtained commercially. A collection of such continuous fiber filaments is referred to as a "tow" and such a tow may have any number of filaments in it. In certain embodiments, one tow is comprised of approximately 3,000-400,000 continuous filaments. In various embodiments, one tow may be comprised of 1,000 to 60,000, 3,000 to 48,000, or 6,000 to 24,000 continuous filaments.

In block 320, multiple tows are utilized to create a uni-directional sheet of fiber. The fiber bundles may be aligned in a common direction. In the various embodiments, the fibers are aligned in the X direction, which is also a machine direction. The horizontal fiber bundles may be disposed horizontally relative to one another and/or partially or wholly intertwined with one another in the machine direction. In various embodiments, some of the fiber bundles may be superposed on one another and aligned in the machine direction. Any number of tows may be so aligned depending on the desired thickness and height of the sheet of fiber.

In various embodiments, as shown at block 330, the aligned tows may be needled by a first needling device. Alternatively, the fibrous layer may be held together through a number of commonly known mechanisms, such as adhesives. A needling device may be similar to an apparatus 8 described in FIG. 2. The needling device may be utilized to needle the aligned fiber bundles and may be used to process continuous fiber bundles. The needling device may be disposed above the fibrous layer or uni-directional sheet of fiber as the fibrous layer is moved in the machine direction. The first needling device may also be proximal to a bobbin to wrap and/or store the fibrous layer after needling.

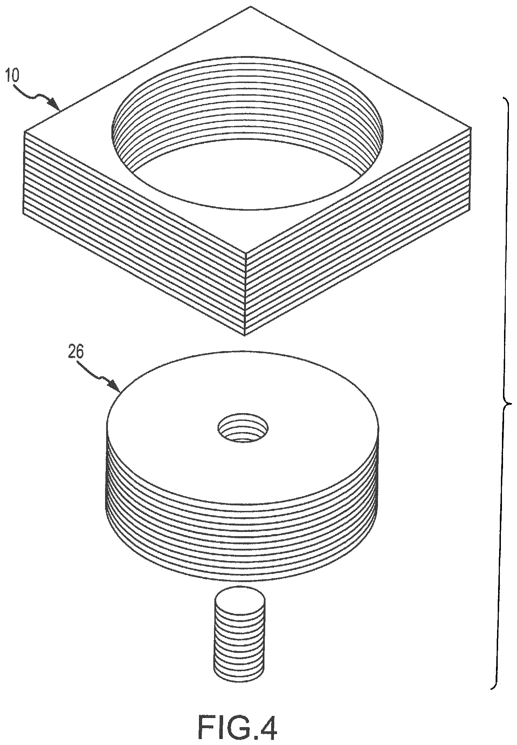

At block 340, the desired thickness of the preform is achieved and the final preform may be stored or shaped for later carbonization. According to various embodiments, the preform is sculpted by a cutting device to shape the final preform into an annular shape to form a fibrous annular preform 26 (with brief reference to FIG. 4). In further embodiments, the preform is sculpted by a cutting device to shape the final preform into a circular shape. In still further embodiments, the final preform may be sculpted into any shape as required for the use of the preform.

As shown in FIG. 4, in response to the fibrous layers 12 being placed on the stack 44 and after the stack 44 has been needled, an annulus may be cut from the stack 44 of fibrous layers 12 to form a fibrous annular preform 26. The resulting fibrous annular preform 26 is substantially composed of PAN or OPF extending in three directions through the fibrous annular preforms 26 and pores, or open spaces, extending therethrough. In a preferred embodiment, no other materials are used in forming the fibrous annular preform 26, such as resins or the like.

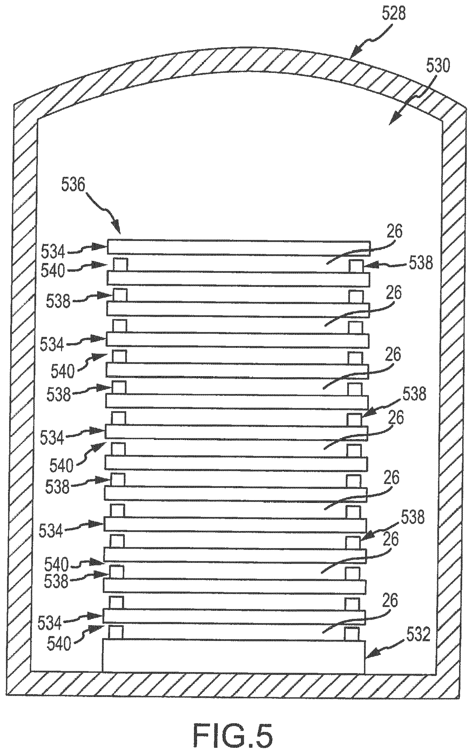

According to various embodiments and with reference to FIG. 5, a group of fibrous annular preforms 26 may be placed on top of each other with separator plates and spacing stops (also referred to herein as "spacers") between each fibrous annular preform 26 to form a preform stack 536. The preform stack may be transported to an oven 528 (also referred to as a furnace). Typically, the stops are designed at a height that is less than the thickness of the fibrous annular preform 26 and defined by a target thickness of the fibrous annular preform 26. For example, the bottommost fibrous annular preform 26 may be placed on a base plate 532 at the bottom of a housing and/or oven 528. A separator plate 534 may be placed on top of the bottommost fibrous annular preform 26. Another fibrous annular preform 26 may then be placed on the separator plate 534, and another separator plate 534 may be placed on that fibrous annular preform 26.

The preform stack 536 of fibrous annular preforms 26 and separator plates 534 may be constructed in this manner, with each fibrous annular preform 26 being separated from superjacent and subjacent fibrous annular preforms 26 by separator plates 534. Stops 538 which are shorter than the thickness of each corresponding OPF fibrous annular preform 26 may be placed between each of the separator plates 534. Thus, after the preform stack 536 of fibrous annular preforms 26 is constructed, gaps 540 exist between the stops 538 and adjacent separator plates 534.

Although FIG. 5 illustrates a single preform stack 536 of fibrous annular preforms 26 in the oven 528, multiple preform stacks of fibrous annular preforms 26 could also be placed in a larger oven. Moreover, the preform stack 536 of fibrous annular preforms 26 may be constructed in the oven 28 or may be constructed outside of the oven 28 and moved into the oven 28 after construction with lifting equipment. Also, multiple fibrous annular preforms 26 may be placed between each separator plate 534 with a stop 538 to control the total thickness following carbonization. Thus, at least two fibrous annular preforms 26 may be placed between two separator plates 534 with a stop 538 positioned between the two separator plates 534. As a result, the compression is combined for multiple fibrous annular preforms 26. This may be particularly useful when the fibrous annular preforms 26 have a thin thickness in the Z direction.

As understood by those in the art, the carbonization process converts the OPF in the fibrous annular preforms 26 into substantially 100% carbon fibers. The carbonization process is distinguished from the densification process (typically carried out after carbonization) in that the densification process involves infiltrating the pores of the fibrous preform and depositing a carbon matrix within the fibrous preform. In contrast, carbonization refers only to the process of converting the fibers which are used to form the fibrous annular preform 26 into carbon fibers. Although it is possible to use pure carbon fibers in the needling process, it is generally undesirable to use pure carbon fibers when forming fibrous structures using typical textile machines because of the difficulties of working with pure carbon fiber. By contrast, carbonaceous fibers like PAN and OPF, which contain carbon in addition to other compounds, have been found to be much easier to work with during typical textile techniques used to form fibrous preforms. For example, PAN and OPF are more stretchable and resilient compared to carbon fiber, and thus, are easier to use in textile machinery. PAN and OPF are also less electrically conductive than carbon fibers, which makes PAN and OPF safer to work with and less harmful to electronic components in the preform manufacturing equipment. As a result, the carbonization process allows the fibrous annular preform 26 to be formed with fibers that are not pure carbon. The fibers that are used during the forming process are then converted during the carbonization process so that the final fibrous preform prior to densification is made up of substantially pure carbon fibers.

In general, the carbonization process involves heating the fibrous annular preforms 26 in a furnace to a temperature greater than 1600°C (2912°F). An inert atmosphere of nitrogen provided in the furnace during the carbonization process. The heat of the furnace causes a chemical conversion of the OPF which converts the fibers to carbon fibers and drives off other chemical species. Although it is preferred that the fibers in the carbonized fibrous annular preforms 26 be 100% carbon fiber, it is generally acceptable for a slightly less than full conversion to take place, and the resulting carbon fiber may be as low as 99.5% carbon.

During carbonization, the total mass and the total fiber volume in each fibrous annular preform 26 is typically reduced due to the loss of non-carbon compounds. For example, a typical fibrous annular preform 26 may lose approximately 50% of its weight during carbonization. In addition, the overall volume of the fibrous annular preform 26 typically shrinks approximately 25-30% volumetric shrinkage during carbonization. When these factors are combined, a typical OPF fibrous annular preform 26 that has a fiber volume ratio of between about 35% and 55% after the forming processes may have a fiber volume ratio of about 16% to 28% after the carbonization process.

At the preform stage and after carbonization, the fibrous annular preforms 26 preferably have a structure of carbon fibers extending in three directions through the fibrous annular preform 26 and pores extending therethrough. The fiber volume ratio after carbonization is preferably about 20-24%.

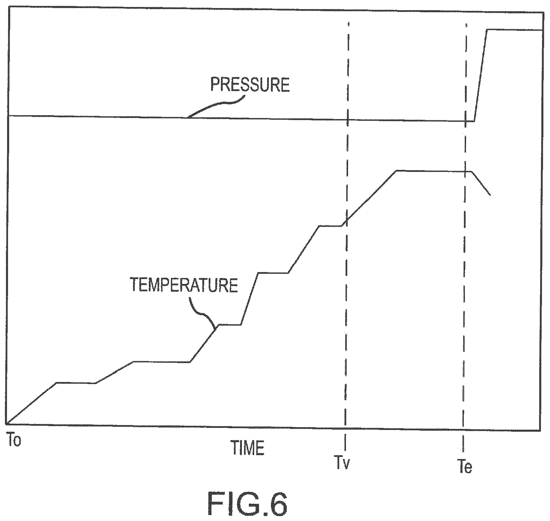

With reference to FIG. 6, a plot of temperature and pressure over time in a carbonization furnace for a PAN carbonization process according to the present disclosure is shown, in accordance with various embodiments. The plot of FIG. 6 illustrates that temperature increases starting at beginning time T₀ of the carbonization process. The carbonization process for preforms may extend over the course of 3 to 5 days to carbonize the preform substantially 100%.

In various embodiments, the temperature increases through time Tᵥ. In a conventional process, a vacuum would typically be drawn at Tᵥ, as depicted in FIG. 1, or at or T₀. However, in various embodiments, as the temperature increases, the pressure levels in the furnace remain at or near typical atmospheric conditions. In various embodiments, the atmosphere may be inert or relatively inert (e.g., comprised of He, Ar, Kr, and/or N₂) to minimize oxidation of the preform. The pressure levels in the furnace may range from 0.9 Atm to 1.1 Atm (91 kPa to 111 kPa). In various embodiments, the pressure levels in the furnace may be maintained at a level greater than or equal to 0.5 Atm (51 kPa) from the beginning of the carbonization step at T₀ through the end of the carbonization step at Tₑ. For example, the pressure may be maintained at 0.66 Atm (67 kPa) for the entire duration of the carbonization process through end time Te. In that regard, vacuum is not drawn during the carbonization step. After end time Te is reached, the furnace may be equalized with atmospheric pressure and begin to cool.

As used herein, the term vacuum may describe a total vacuum or partial vacuum with a pressure below 0.1 Atm (1.5 kPa). By eliminating the vacuum step from preform carbonization, the risk of oxidation due to an air leak introducing oxygen into the furnace is also reduced as there is a minimal pressure gradient between the furnace and the air surrounding the furnace. In that regard, the carbonization process of the present disclosure reduces the risk of scrapped parts as a result of oxidation. Additionally, the cost and the environmental risk associated with carbon brake production may be reduced, as components and chemicals used to draw vacuum (e.g., liquid ring pumps, dry screw pumps, oil contaminant, etc.) may not be used.

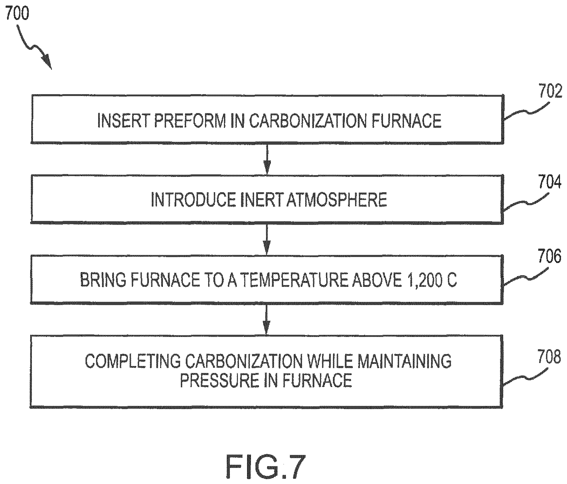

With reference to FIG. 7, a flow chart for a process 700 of carbonizing a fibrous PAN preform in a carbonization furnace without drawing vacuum in the furnace during carbonization is shown, in accordance with various embodiments. In block 702, preforms are inserted into a carbonization furnace. The furnace may hold multiple stacks of preforms during a single cycle carbonization process. For example, the carbonization furnace may have a capacity of about 600 fibrous PAN preforms per carbonization cycle or more.

In block 704, an inert atmosphere is introduced into the furnace. The inert atmosphere is introduced with a total pressure greater than or equal to 0.5 Atm (51 kPa). In various embodiments, the total pressure may be maintained above 0.8 Atm (81 kPa). The inert atmosphere may be a nitrogen gas atmosphere, for example. In block 706, the furnace may be brought up to a temperature greater than or equal to 1,200°C (2,192°F). Throughout the process, a pressure greater than or equal to 0.5 Atm (51 kPa) is maintained within the furnace. Throughout the process, a pressure greater than or equal to 0.8 Atm (81 kPa) may also be maintained within the furnace. The carbonization process may extend over 3 to 5 days with the preforms in the furnace from beginning to end. While the preforms are in the furnace, no vacuum is drawn in the furnace and pressure within the furnace remains between 0.5 Atm (51 kPa) and 1.1 Atm (111 kPa), in various embodiments. In block 708, carbonization is completed while maintaining the pressure in the furnace greater than or equal to 0.5 Atm (51 kPa). In various embodiments the pressure may be maintained above 0.8 Atm (81 kPa). In that regard, carbonization may be carried out to completion without drawing vacuum in the furnace.

Additionally, benefits, other advantages, and solutions to problems have been described herein with regard to various embodiments.

As used herein, the singular forms "a," "an," and "the" include plural referents unless the context clearly dictates otherwise. As used herein, the terms "for example," "for instance," "such as," or "including" are meant to introduce examples that further clarify more general subject matter. Unless otherwise specified, these examples are embodiments of the present disclosure, and are not meant to be limiting in any fashion.

## Claims

1. A method of carbonizing a preform comprising:
inserting a polyacrylonitrile preform, PAN preform, (10) into a furnace (702);
introducing an inert atmosphere into the furnace with a total pressure in the furnace greater than 0.5 Atm (704);
bringing the furnace to a temperature greater than 1200°C (706) while maintaining the total pressure in the furnace greater than 0.5 Atm to convert the PAN preform into a carbon preform;
completing carbonization while maintaining the total pressure in the furnace within a range of 0.5 Atm (51 kPa) to 0.9 Atm (91 kPa) (708);
inserting the PAN preform into the furnace at an atmospheric pressure and an atmospheric temperature (702);
introducing said inert atmosphere into the furnace with a total pressure in the furnace greater than 0.8 Atm (704);
heating the furnace to said temperature greater than 1200°C (706) while maintaining the total pressure greater 0.8 Atm; and
completing carbonization by converting the PAN preform into said carbon preform while maintaining the total pressure in the furnace greater than 0.8 Atm (708).

2. The method of claim 1, wherein the PAN preform is formed by needling a plurality of tows, and preferably wherein the PAN preform is formed by cutting an annular portion of the needled plurality of tows.

3. The method of claim 1 or 2, the method comprising completing the carbonization while maintaining the total pressure in the furnace between 0.5 Atm and 0.8 Atm and at a temperature of greater than or equal to 1200°C for 3-5 days to create the carbon preform having a fiber volume ratio of about 16% to 28%.

4. The method of any preceding claim, the method comprising completing the carbonization while maintaining the total pressure in the furnace between 0.5 Atm and 0.8 Atm and at a temperature of greater than or equal to 1200°C for 3 to 5 days to create the carbon preform weighing approximately 50% of what the PAN preform weighed before the inserting the PAN preform into the furnace.

5. The method of claim 1 or 2, wherein the furnace reaches a temperature greater than 1200°C while the total pressure in the furnace is maintained at greater than 0.8 Atm.

6. The method of any preceding claim, further comprising densifying the carbon preform by depositing a carbon matrix within a pore of the carbon preform.

7. The method of claim 1 or 6, wherein the PAN preform is formed by cutting an annular portion of a needled plurality of tows.

8. The method of any of claims 6 or 7, the method comprising completing the carbonization while maintaining the total pressure in the furnace greater than 0.8 Atm and at a temperature of greater than or equal to 1200°C for 3-5 days to create the carbon preform having a fiber volume ratio of about 16% to 28%.

9. The method of any of claims 6 to 8, the method comprising completing the carbonization while maintaining the total pressure in the furnace greater than 0.8 Atm and at a temperature of greater than or equal to 1200°C for 3-5 days to create the carbon preform weighing approximately 50% of a weight of the PAN preform before the inserting the PAN preform into the furnace.

10. The method of any preceding claim, wherein the PAN preform comprises oxidized polyacrylonitrile (OPF).

## Patentansprüche

1. Verfahren zum Karbonisieren eines Vorformlings, umfassend:
Einsetzen eines Polyacrylnitril-Vorformlings, PAN-Vorformlings, (10) in einen Ofen (702);
Einführen einer inerten Atmosphäre in den Ofen, wobei in dem Ofen ein Gesamtdruck von über 0,5 Atm (704) herrscht;
Erhitzen des Ofens auf eine Temperatur von über 1200 °C (706), während der Gesamtdruck in dem Ofen bei über 0,5 Atm gehalten wird, um den PAN-Vorformling in einen Kohlenstoff-Vorformling umzuwandeln;
Abschließen der Karbonisierung, während der Gesamtdruck in dem Ofen innerhalb eines Bereichs von 0,5 Atm (51 kPa) bis 0,9 Atm (91 kPa) (708) gehalten wird;
Einsetzen des PAN-Vorformlings in den Ofen bei einem atmosphärischen Druck und einer Umgebungstemperatur (702);
Einführen der inerten Atmosphäre in den Ofen, wobei in dem Ofen ein Gesamtdruck von über 0,8 Atm (704) herrscht;
Erwärmen des Ofens auf die Temperatur über 1200 °C (706), während der Gesamtdruck über 0,8 Atm aufrechterhalten wird; und
Abschließen der Karbonisierung durch Umwandeln des PAN-Vorformlings in den Kohlenstoff-Vorformling, während der Gesamtdruck in dem Ofen über 0,8 Atm (708) aufrechterhalten wird.

2. Verfahren nach Anspruch 1, wobei der PAN-Vorformling durch Vernadeln einer Vielzahl von Spinnkabeln gebildet wird, und vorzugsweise wobei der PAN-Vorformling durch Schneiden eines ringförmigen Abschnitts der vernadelten Vielzahl von Spinnkabeln gebildet wird.

3. Verfahren nach Anspruch 1 oder 2, wobei das Verfahren das Abschließen der Karbonisierung umfasst, während der Gesamtdruck in dem Ofen zwischen 0,5 Atm und 0,8 Atm und bei einer Temperatur größer oder gleich 1200 °C über 3-5 Tage gehalten wird, um den Kohlenstoff-Vorformling zu erzeugen, der ein Faser-VolumenVerhältnis von etwa 16 % bis 28 % aufweist.

4. Verfahren nach einem der vorstehenden Ansprüche, wobei das Verfahren das Abschließen der Karbonisierung umfasst, während der Gesamtdruck in dem Ofen zwischen 0,5 Atm und 0,8 Atm und bei einer Temperatur größer oder gleich 1200 °C über 3-5 Tage gehalten wird, um den Kohlenstoff-Vorformling zu erzeugen, der etwa 50 % dessen wiegt, was der PAN-Vorformling vor dem Einsetzen des PAN-Vorformlings in den Ofen gewogen hat.

5. Verfahren nach Anspruch 1 oder 2, wobei der Ofen eine Temperatur über 1200 °C erreicht, während der Gesamtdruck in dem Ofen bei größer als 0,8 Atm gehalten wird.

6. Verfahren nach einem der vorstehenden Ansprüche, ferner das Verdichten des Kohlenstoff-Vorformlings durch Abscheiden einer Kohlenstoffmatrix innerhalb einer Pore des Kohlenstoff-Vorformlings umfassend.

7. Verfahren nach Anspruch 1 oder 6, wobei der PAN-Vorformling durch Schneiden eines ringförmigen Abschnitts einer vernadelten Vielzahl von Spinnkabeln gebildet wird.

8. Verfahren nach einem der Ansprüche 6 oder 7, wobei das Verfahren das Abschließen der Karbonisierung umfasst, während der Gesamtdruck in dem Ofen über 0,8 Atm und bei einer Temperatur größer oder gleich 1200 °C über 3-5 Tage gehalten wird, um den Kohlenstoff-Vorformling zu erzeugen, der ein Faser-VolumenVerhältnis von etwa 16 % bis 28 % aufweist.

9. Verfahren nach einem der Ansprüche 6 bis 8, wobei das Verfahren das Abschließen der Karbonisierung umfasst, während der Gesamtdruck in dem Ofen über 0,8 Atm und bei einer Temperatur größer oder gleich 1200 °C über 3-5 Tage gehalten wird, um den Kohlenstoff-Vorformling zu erzeugen, der etwa 50 % eines Gewichts des PAN-Vorformlings vor dem Einsetzen des PAN-Vorformlings in den Ofen wiegt.

10. Verfahren nach einem der vorstehenden Ansprüche, wobei der PAN-Vorformling oxidiertes Polyacrylnitril (OPF) umfasst.

## Revendications

1. Procédé de carbonisation d'une préforme comprenant :
l'insertion d'une préforme de polyacrylonitrile, préforme de PAN, (10) dans un four (702) ;
l'introduction d'une atmosphère inerte dans le four avec une pression totale dans le four supérieure à 0,5 Atm (704) ;
la mise à niveau du four à une température supérieure à 1 200 °C (706) tout en maintenant la pression totale dans le four a plus de 0,5 Atm pour convertir la préforme de PAN en une préforme de carbone ;
l'achèvement de la carbonisation tout en maintenant la pression totale dans le four dans une plage comprise entre 0,5 Atm (51 kPa) et 0,9 Atm (91 kPa) (708) ;
l'insertion de la préforme de PAN dans le four à une pression atmosphérique et à une température atmosphérique (702) ;
l'introduction de ladite atmosphère inerte dans le four avec une pression totale dans le four supérieure à 0,8 Atm (704) ;
le chauffage du four à ladite température supérieure à 1 200 °C (706) tout en maintenant la pression totale à plus de 0,8 Atm ; et
l'achèvement de la carbonisation en convertissant la préforme de PAN en ladite préforme de carbone tout en maintenant la pression totale dans le four à plus de 0,8 Atm (708).

2. Procédé selon la revendication 1, dans lequel la préforme de PAN est formée en aiguilletant une pluralité de câbles, et de préférence dans lequel la préforme de PAN est formée en coupant une partie annulaire de la pluralité aiguilletée de câbles.

3. Procédé selon la revendication 1 ou 2, le procédé comprenant l'achèvement de la carbonisation tout en maintenant la pression totale dans le four entre 0,5 Atm et 0,8 Atm et à une température supérieure ou égale à 1 200 °C pendant 3 à 5 jours pour créer la préforme de carbone ayant un taux volumique de fibres d'environ 16 % à 28 %.

4. Procédé selon une quelconque revendication précédente, le procédé comprenant l'achèvement de la carbonisation tout en maintenant la pression totale dans le four entre 0,5 Atm et 0,8 Atm et à une température supérieure ou égale à 1 200 °C pendant 3 à 5 jours pour créer la préforme de carbone pesant environ 50 % de ce que pesait la préforme de PAN avant l'insertion de la préforme de PAN dans le four.

5. Procédé selon la revendication 1 ou 2, dans lequel le four atteint une température supérieure à 1 200 °C tandis que la pression totale dans le four est maintenue à plus de 0,8 Atm.

6. Procédé selon une quelconque revendication précédente, comprenant en outre la densification de la préforme de carbone en déposant une matrice de carbone à l'intérieur d'un pore de la préforme de carbone.

7. Procédé selon la revendication 1 ou 6, dans lequel la préforme de PAN est formée en coupant une partie annulaire d'une pluralité aiguilletée de câbles.

8. Procédé selon l'une quelconque des revendications 6 ou 7, le procédé comprenant l'achèvement de la carbonisation tout en maintenant la pression totale dans le four à plus de 0,8 Atm et à une température supérieure ou égale à 1 200 °C pendant 3 à 5 jours pour créer la préforme de carbone ayant un taux volumique de fibres d'environ 16 % à 28 %.

9. Procédé selon l'une quelconque des revendications 6 à 8, le procédé comprenant l'achèvement de la carbonisation tout en maintenant la pression totale dans le four à plus de 0,8 Atm et à une température supérieure ou égale à 1 200 °C pendant 3 à 5 jours pour créer la préforme de carbone pesant environ 50 % d'un poids de la préforme de PAN avant l'insertion de la préforme de PAN dans le four.

10. Procédé selon une quelconque revendication précédente, dans lequel la préforme de PAN comprend du polyacrylonitrile oxydé (OPF) .
